# EUROPEAN PATENT APPLICATION

(11) **EP 3 404 650 A1**
(43) Date of publication of application: **21.11.2018**
(21) Application number: 17738589.5
(22) Date of filing: 03.01.2017
(51) Int. Cl.: G10K 1/06, G10K 1/062, H01H 51/34, H02J 7/02, H02H 7/10

(54) **DOORBELL DEVICE AND METHOD FOR SUPPLYING POWER THERETO**

(30) Priority: 11.01.2016 KR 20160003250
(71) Applicant: LG Innotek Co., Ltd., 98 Huam-ro, Jung-gu Seoul 04637 (KR)
(72) Inventor: JEON, Ki Kyung, Seoul 04637 (KR)
(74) Representative: Novagraaf Technologies
(86) International application number: PCT/KR2017/000053
(87) International publication number: WO 2017/122960

(57) **Abstract**

A doorbell device according to an embodiment of the present invention comprises: a power input unit; an interface unit; a battery unit for supplying power to the interface unit; a switching circuit which is connected to a doorbell switch so as to change the path of a current supplied from the power input unit according to the on/off state of the switch; a control unit for charging the battery unit by using a current output from the switching circuit; and a current detection unit which is connected between the switching circuit and the control unit so as to detect the current output from the switching circuit, wherein the control unit limits the current output from the switching circuit when the current detected by the current detection unit has a value equal to or greater than a predetermined value.

## Description

### [Technical Field]

The present invention relates to a doorbell device and a method for supplying power thereto.

### [Background Art]

A conventional doorbell system installed within a house includes a transformer, a doorbell, and a doorbell switch. The transformer converts a level of an alternating current (AC) voltage into a level thereof suitable for operating the doorbell. The doorbell is a device for outputting a sound using electromagnetism or electricity and may be interchangeably used with a bell, a buzzer, a chime, or the like. Further, the doorbell switch is a switch which is usually in an open state, and when the doorbell switch becomes a closed state, the doorbell system is activated. For example, when a person presses the doorbell switch, the doorbell switch is closed and a closed loop for the doorbell is formed. Consequently, the doorbell may output a sound.

Meanwhile, as the desire for user convenience increases, a technique for connecting various interface devices to a doorbell system is being developed. To this end, there is an attempt for branching power, from a conventional doorbell system to an interface, to supply the power. However, in this case, there is a problem in that power is not supplied to the interface device because a closed circuit for the doorbell is formed when the doorbell switch is closed. Accordingly, there is an attempt to use a battery to supply power to an interface device, but when an overcurrent flows in the doorbell system upon charging of the battery, malfunction may occur in a doorbell.

### [Disclosure]

### [Technical Problem]

The present invention is directed to providing a doorbell system including an interface device.

### [Technical Solution]

One aspect of the present invention provides a doorbell device including a power input unit, an interface unit, a battery unit for supplying power to the interface unit, a switching circuit configured to change a path of a current supplied from the power input unit according to an ON or OFF state of the doorbell switch, a control unit for charging the battery unit using a current output from the switching circuit, and a current detection unit connected between the switching circuit and the control unit and configured to detect the current output from the switching circuit, wherein, when a current value detected by the current detection unit is greater than or equal to a predetermined value, the control unit limits the current output from the switching circuit.

When the current output from the switching circuit toward the control unit is cut off, the control unit may control the battery unit to supply power to the interface unit.

A path of the current may be a path directed to the control unit or a path directed to the doorbell switch.

The switching circuit may include a triac element, and when the doorbell switch is turned on, the triac element may cut off a current output to the control unit and may allow the current to flow to the doorbell switch.

The switching circuit may further include a gate element, and the gate element may transmit a driving signal to the interface unit.

The interface unit may be operated in a sleep mode or an operation mode, and power consumption when the interface unit is operated in the operation mode may be greater than power consumption when the interface unit is operated in the sleep mode.

The interface unit may be switched from the sleep mode to the operation mode in response to the driving signal.

The gate element may be connected to the triac element and may operate in response to the current flowing to the doorbell switch.

The gate element may include an optocoupler.

The interface unit may include at least one of an audio module, an image module, a communication module, and a sensor module.

The switching circuit may further include a rectifier, and the rectifier may rectify an alternating current (AC), which is a current received from the power input unit, into a direct current (DC) and may supply the DC current to the control unit.

The control unit may include a converter and a battery charging chip.

A current value detected by the current detection unit may be input to the converter, and when the current value is greater than or equal to a predetermined value, the converter may cut off or reduce the current output from the switching circuit.

The interface unit may include a System on Chip (SoC) for controlling the interface unit, and when the SoC receives a doorbell switch turn-on signal from the doorbell switch, the SoC may generate and output a doorbell control signal.

The switching circuit may include a triac element connected to the doorbell, and the doorbell control signal may be applied to a gate electrode of the triac element.

A transistor may be further disposed between the SoC and the gate electrode of the triac element, and when the doorbell control signal output from the SoC conducts the transistor, a gate signal may be applied to the gate electrode of the triac element.

At least one of a cycle, the number of times, and a duration time of ringing of the doorbell may be adjusted according to the doorbell control signal.

Another aspect of the present invention provides a method for supplying power to a doorbell device, the method including receiving, by a switching circuit, power from a power input unit, changing, by the switching circuit, a path of a current supplied from the power input unit according to an ON or OFF state of a doorbell switch, detecting, by a current detection unit, a current output from the switching circuit, when a current value detected by the current detection unit is greater than or equal to a predetermined value, limiting, by a control unit, the current output from the switching circuit, charging, by the control unit, the battery unit using the current output from the switching circuit, and supplying, by the battery unit, charged power to the interface unit.

### [Advantageous Effects]

A doorbell system according to the embodiment of the present invention can stably supply power to an interface device even when a closed circuit for a doorbell is formed. Further, the doorbell system according to the embodiment of the present invention can continuously charge a battery that supplies power to the interface device. Furthermore, the doorbell system according to the embodiment of the present invention can prevent malfunction of a doorbell caused by charging of a battery.

### [Description of Drawings]

FIG. 1 is a diagram illustrating a doorbell system according to one embodiment of the present invention.
FIG. 2 is a block diagram of a doorbell device according to one embodiment of the present invention.
FIG. 3 is a block diagram of an interface unit included in the doorbell device according to one embodiment of the present invention.
FIG. 4 is a flowchart illustrating a method for supplying power to the doorbell device according to one embodiment of the present invention.
FIG. 5 is a circuit diagram included in the doorbell device according to one embodiment of the present invention.
FIG. 6 is a diagram for describing operations of a current detection unit and a converter which are included in the doorbell device according to one embodiment of the present invention.
FIG. 7 is a circuit diagram included in a doorbell device according to another embodiment of the present invention.

### [Modes of the Invention]

The present invention may be modified into various forms and may have a variety of embodiments, and, therefore, specific embodiments will be illustrated in the drawings and described. The embodiments, however, are not to be taken in a sense which limits the present invention to the specific embodiments, and should be construed to include modifications, equivalents, or substituents within the spirit and technical scope of the present invention.

Also, the terms including ordinal numbers such as first, second, and the like used herein may be used to describe various components, but the various components are not limited by the terms. The terms are used only for the purpose of distinguishing one component from another component. For example, without departing from the scope of the present invention, a second component may be referred to as a first component, and similarly, a first component may also be referred to as a second component. The term "and/or" includes a combination of a plurality of related listed items or any one item of the plurality of related listed items.

When a component is referred to as being "connected" or "coupled" to another component, it may be directly connected or coupled to the other component, but it should be understood that another component may exist between the component and the other component. Contrarily, when a component is referred to as being "directly connected" or "directly coupled" to another component, it should be understood that the other component may be absent between the component and the other component.

The terms used herein are employed to describe only specific embodiments and are not intended to limit the present invention. Unless the context clearly dictates otherwise, the singular form includes the plural form. It should be understood that the terms "comprise," "include," and "have" specify the presence of stated herein features, numbers, steps, operations, components, elements, or combinations thereof, but do not preclude the presence or possibility of adding one or more other features, numbers, steps, operations, components, elements, or combinations thereof.

Unless otherwise defined, all terms including technical or scientific terms used herein have the same meaning as commonly understood by those skilled in the art to which the present invention pertains. General terms that are defined in a dictionary shall be construed as having meanings that are consistent in the context of the relevant art and are not to be interpreted as having an idealistic or excessively formalistic meaning unless clearly defined in the present application.

Hereinafter, embodiments of the present invention will be described in detail with reference to the drawings, the same reference numerals are given to the same or corresponding components regardless of a number of the drawing, and a repetitive description thereof will be omitted.

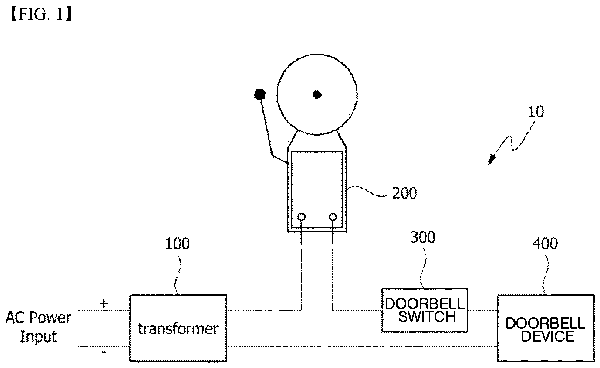

FIG. 1 is a diagram illustrating a doorbell system according to one embodiment of the present invention.

Referring to FIG. 1, a doorbell system 10 according to one embodiment of the present invention includes a transformer 100, a doorbell 200, a doorbell switch 300, and a doorbell device 400.

The transformer 100 may include a primary coil and a secondary coil. The primary coil may be connected to an alternating current (AC) power source (not shown) installed within a house, and the second coil may be sequentially connected to the doorbell 200, the doorbell switch 300, and the doorbell device 400. The transformer 100 converts a level of an AC voltage into a level thereof suitable for operating the doorbell 200. The doorbell 200 is a device for outputting a sound using electromagnetism or electricity, and may be interchangeably used with a bell, a buzzer, a chime, or the like. The doorbell switch 300 is a switch which is usually in an open state, and when the doorbell switch 300 is pressed, the doorbell 200 is activated to output a sound.

Further, the doorbell device 400 according to one embodiment of the present invention may include various interface devices and may be connected to a conventional doorbell system, i.e., the transformer 100, the doorbell 200, and the doorbell switch 300. According to one embodiment of the present invention, power may be stably supplied to various interface devices included in the doorbell device 400 regardless of an ON or OFF state of the doorbell switch 300.

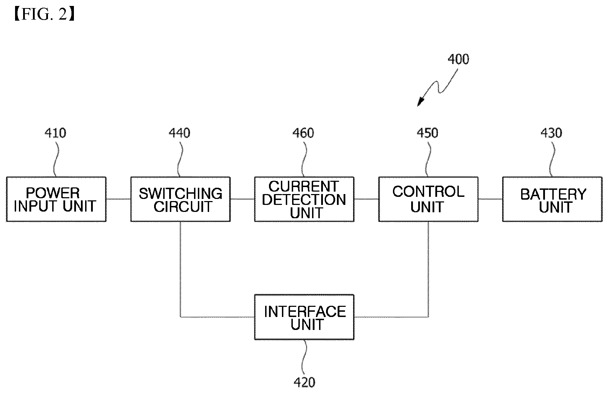

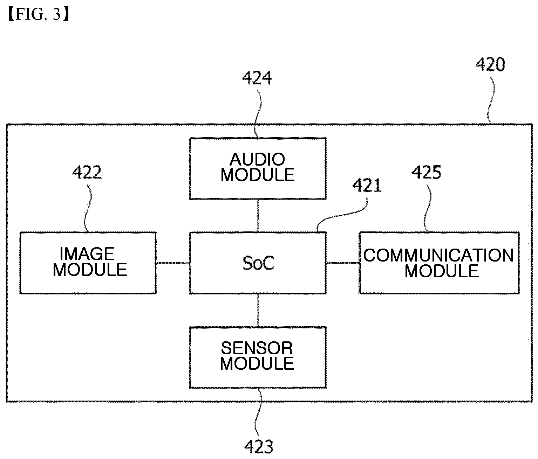

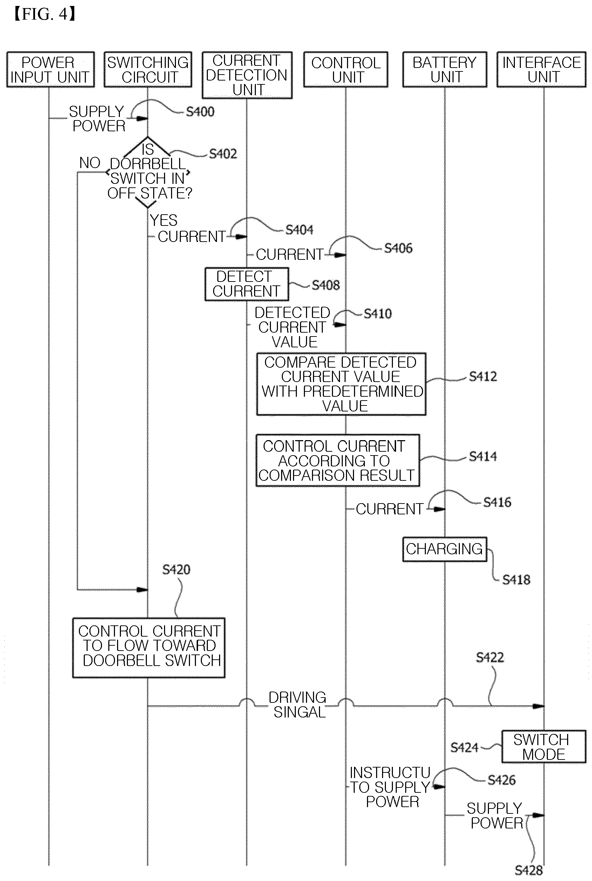

FIG. 2 is a block diagram of a doorbell device according to one embodiment of the present invention, FIG. 3 is a block diagram of an interface unit included in the doorbell device according to one embodiment of the present invention, and FIG. 4 is a flowchart illustrating a method for supplying power to the doorbell device according to one embodiment of the present invention.

Referring to FIG. 2, a doorbell device 400 includes a power input unit 410, an interface unit 420, a battery unit 430, a switching circuit 440, a control unit 450, and a current detection unit 460.

The power input unit 410 supplies power to the doorbell device 400. At this point, the power supplied from the power input unit 410 may be an AC voltage input from an AC power source installed within a house. The power input unit 410 is illustrated as being included in the doorbell device 400, but the present invention is not necessarily limited thereto. The power input unit 410 may be an external configuration of the doorbell device 400.

The switching circuit 440 is connected to the doorbell switch 300 and changes a path of a current supplied from the power input unit 410 according to an ON or OFF state of the doorbell switch 300.

The control unit 450 charges the battery unit 430 using a current output from the switching circuit 440. Further, the control unit 450 controls a supply of power to the interface unit 420.

The battery unit 430 supplies power to the interface unit 420.

Meanwhile, when a current output from the switching circuit 440 to flow toward the control unit 450 is greater than or equal to a predetermined value, this may affect the entire doorbell system. For example, when the current output from the switching circuit 440 to flow toward the control unit 450 is greater than or equal to a predetermined value (e.g., 150 mA), an electromagnetic configuration of the doorbell 200 may be affected and thus malfunction of the doorbell 200 may occur.

Accordingly, the doorbell device 400 according to the embodiment of the present invention includes the current detection unit 460 connected between the switching circuit 440 and the control unit 450. The current detection unit 460 detects a current output from the switching circuit 440. Further, when the current detected by the current detection unit 460 is greater than or equal to a predetermined value, the control unit 450 limits the current output from the switching circuit 440. Accordingly, it is possible to prevent malfunction of the doorbell 200 due to an overcurrent output from the switching circuit 440 toward the control unit 450.

Referring to FIG. 3, the interface unit 420 may include a system on chip (SoC) 421, an image module 422, a sensor module 423, an audio module 424, and a communication module 425. However, this is merely an example, and the interface unit 420 according to one embodiment of the present invention may include more or fewer configurations than these configurations.

The SoC 421 may be connected to the image module 422, the sensor module 423, the audio module 424, and the communication module 425 and may control the entire interface unit 420.

The image module 422 may be interchangeably used with a camera module. The image module 422 may include a lens and an image sensor. The lens includes at least one from among a convex lens, a concave lens, a cylindrical lens, a Fresnel lens, and a wide-angle lens and is configured to photograph a target object which is positioned within a predetermined range from an installation position of the lens. The image sensor converts an optical signal incident through a lens module into an image signal. The image sensor corresponds to a component which is generally employed in a digital camera and the like and serves to convert light incident through a camera lens, i.e., photographed image information, into digital information, which is an electrical signal.

The sensor module 423 senses a surrounding target object. For example, the sensor module 423 may include at least one of a geomagnetic sensor, an acceleration sensor, an altimeter, a gyro sensor, and an infrared sensor. Here, the infrared sensor may be a passive infrared ray (PIR) sensor. The PIR sensor may sense a temperature variation of a target object. Therefore, when a person moves, the sensor module 423 may sense that the person exists through utilizing the temperature variation. A plurality of sensor modules 423 may be installed at the periphery of the image module 422.

The SoC 421 receives an image signal through the image module 422 and a sensing signal with respect to a target object through the sensor module 423 to process the received image signal and the received sensing signal. For example, the SoC 421 may compensate for the image signal received through the image module 422 using the sensing signal, which is received through the sensor module 423, with respect to the target object.

Meanwhile, the audio module 424 may include a microphone and a speaker. The microphone may receive an audio signal, and the speaker may output the audio signal. The SoC 421 may process the audio signal which is input through the microphone.

The communication module 425 includes a wired or wireless communication module and may transmit the image signal, which is processed through the SoC 421, to a display device (not shown) or the audio signal, which is processed through the SoC 421, to the speaker.

According to the embodiment of the present invention, the interface unit 420 may operate in a sleep mode or an operation mode. When the interface unit 420 operates in the operation mode, power consumption is higher than power consumption when the interface unit 420 operates in the sleep mode.

When the doorbell switch 300 is in an ON state, the interface unit 420 may be switched from the sleep mode to the operation mode by a driving signal transmitted in response to a current flowing toward the doorbell switch 300.

Referring to FIGS. 2 and 4, the switching circuit 440 receives power from the power input unit 410 (S400). The power input unit 410 may supply an AC voltage input from an AC power source installed within a house to an interior of the doorbell device 400. In the present disclosure, the power input unit 410 supplies power to the interior of the doorbell device 400, and thus the power input unit 410 may be referred to as a power supply unit. The switching circuit 440 may be connected to the doorbell switch 300 and may change a path of a current supplied from the power input unit 410 according to an ON or OFF state of the doorbell switch 300.

That is, when the doorbell switch 300 is in the OFF state, the switching circuit 440 may control the path of the current to be directed toward the battery unit 430 through the control unit 450 (S402). Accordingly, the current is output from the switching circuit 440 (S404) and then flows to the control unit 450 via the current detection unit 460 (S406).

At this point, the current output from the switching circuit 440 flows to the control unit 450 via the current detection unit 460 and, at the same time, the current is detected by the current detection unit 460 (S408), and the detected current value is transmitted to the control unit 450 (S410). The control unit 450 compares the detected current value from the current detection unit 460 with a predetermined value (e.g., 150 mA) (S412), and when the detected current value is greater than or equal to the predetermined value, the control unit 450 may cut off or reduce the current output from the switching circuit 440 (S414). Accordingly, when the doorbell switch 300 is in the OFF state, an overcurrent does not flow in the doorbell device 400, and thus malfunction of the doorbell 200 may be prevented. Further, the current output from the current detection unit 460 in the operation S406 flows to the battery unit 430 through the control unit 450 (S416) and the current is charged in the battery unit 430 (S418).

Meanwhile, when the doorbell switch 300 is in the ON state, the switching circuit 440 controls the path of the current to be directed toward the doorbell 200 and the doorbell switch 300 (S420). At this point, a driving signal may be transmitted to the interface unit 420 in response to a current flowing to the doorbell switch 300 (S422). Accordingly, when the interface unit 420 operating in a sleep mode receives the driving signal, the interface unit 420 may be switched to an operation mode (S424).

Meanwhile, when the doorbell switch 300 is in the ON state and thus a path of a current directed toward the control unit 450 is blocked, or when a path of the current output from the switching circuit 440 is blocked by the control unit 450 even though the doorbell switch 300 is in the OFF state, the unit 450 may instruct the battery unit 430 to supply power to the interface unit 420 (S426). Accordingly, the battery unit 430 may supply the charged power to the interface unit 420 (S428).

As described above, the power may be stably supplied to the interface unit 420 regardless of the ON or OFF state of the doorbell switch 300.

Hereinafter, the doorbell device according to one embodiment of the present invention will be described in more detail with reference to a circuit diagram.

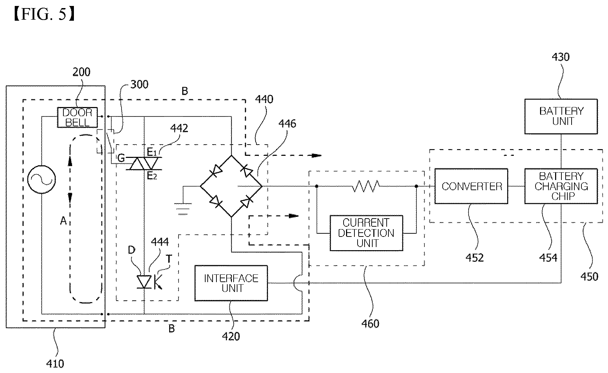

FIG. 5 is a circuit diagram included in the doorbell device according to one embodiment of the present invention.

Referring to FIG. 5, the AC power is supplied to the doorbell device 400 through the power input unit 410.

The switching circuit 440 is connected to the doorbell switch 300 and includes a triac element 442. The triac element 442 is a semiconductor control element for performing bi-directional current control and has two main electrodes E1 and E2 and one gate electrode G. When a gate signal is not applied to the gate electrode G, the triac element 442 may be turned off, and when the gate signal is applied to the gate electrode G, the triac element 442 may be bi-directionally connected regardless of polarities of the main electrodes E1 and E2.

When the doorbell switch 300 is pressed, i.e., when the doorbell switch 300 becomes an ON state, the gate signal is applied to the gate electrode G of the triac element 442, and thus a closed circuit is formed as Path A. That is, a path of a current is directed to the doorbell 200 and the doorbell switch 300, and the current may be cut off so as to prevent a current flow in Path B toward the control unit 450.

Here, the doorbell 200 and the power input unit 410 including the doorbell 200 are exemplified as being included in the doorbell device 400 according to one embodiment of the present invention, but the present invention is not limited thereto. The doorbell 200 and the power input unit 410 including the doorbell 200 may not be included in the doorbell device 400 according to one embodiment of the present invention. Consequently, the doorbell device 400 according to one embodiment of the present invention may be interchangeably used with the doorbell 200 installed within a house in advance and the power input unit 410 including the doorbell 200.

Meanwhile, the switching circuit 440 further includes a gate element 444. The gate element 444 is connected to the triac element 442 and operates in response to a current flowing to the doorbell 200 and the doorbell switch 300 when the triac element 442 is turned on. Further, the gate element 444 may transmit a driving signal to the interface unit 420 in response to the current flowing to the doorbell 200 and the doorbell switch 300. To this end, the gate element 444 may include an optocoupler. The optocoupler may be interchangeably used with a photo coupler. The optocoupler includes a light emitting diode D and a phototransistor T, and when a current is applied to the light emitting diode D, the light emitting diode D emits light. The phototransistor T may receive light emitted by a light emitting diode D to become a conducting state. Using such a principle, when the doorbell switch 300 is pressed, i.e., when the doorbell switch 300 becomes an ON state, the gate element 444 may transmit a signal for driving the interface unit 420.

Meanwhile, when the doorbell switch 300 is released from the pressed state, i.e., when the doorbell switch 300 becomes an OFF state, a path of the current is directed to the control unit 450. To this end, the switching circuit 440 may further include a rectifier 446. The rectifier 446 is connected to the control unit 450 and rectifies an AC current supplied from the power input unit 410 into a direct current (DC) current to supply the DC current to the control unit 450. For example, the rectifier 446 may include a bridge diode. As shown in FIG. 5, the bridge diode is a bridge circuit in which four diodes are connected. The bridge diode rectifies the AC current into the DC current to output the DC current, and a voltage input to the bridge diode is equal to a voltage output from the bridge diode.

The control unit 450 receives the DC current rectified by the rectifier 446. The control unit 450 may include a converter 452 and a battery charging chip 454. The converter 452 may drop a voltage of the DC current output through the rectifier 46 to a voltage suitable for the battery charging chip 454. Here, the converter 452 may be a DC-DC converter. For example, the converter 452 may convert a voltage in the range of 8 to 24V into a voltage of 5V.

The battery charging chip 454 is connected to the converter 452 and receives a predetermined voltage from the converter 452. The battery charging chip 454 may control to allow power to be supplied to the interface unit 420 or may control the battery unit 430 to be charged with the power. The battery charging chip 454 may control the battery unit 430 to supply the power charged in the battery unit 430 to the interface unit 420.

For example, when the doorbell switch 300 is in an OFF state, power cannot be supplied to the interface unit 420 through the switching circuit 440. At this point, the battery charging chip 454 may control the voltage, which is rectified by the rectifier 446 and then converted by the converter 452, to also be applied to the interface unit 420, or the battery charging chip 454 may control the power charged in the battery unit 430 to be supplied to the interface unit 420.

Further, when the doorbell switch 300 is in an ON state, the driving signal may be transmitted to the interface unit 420 through the switching circuit 440, but power may be insufficient in allowing the interface unit 420 to continue the operation. Accordingly, when the doorbell switch 300 is in the ON state and a path of a current output to the control unit 450 is blocked, the control unit 450 may control the battery unit 430 to supply the power charged in the battery unit 430 to the interface unit 420.

Consequently, the interface unit 420 may stably receive the power regardless of the ON or OFF state of the doorbell switch 300. Further, even in an instance when the doorbell switch 300 is switched from the ON state to the OFF state, the power charged in the battery unit 430 may be supplied to the interface unit 420, so that operation quality of the interface unit 420 can be improved.

Meanwhile, as described above, when the doorbell switch 300 is in the OFF state, the current rectified into the DC by the rectifier 446 of the switching circuit 440 flows toward the converter 452 of the control unit 450. The converter 452 may serve as a system power source or may serve to provide a stable voltage and a stable current to the battery charging chip. At this point, when the current value is greater than or equal to a predetermined value (e.g., 150 mA), electromagnetic formation of the doorbell 200 may be affected and thus malfunction of the doorbell 200 may occur. According to one embodiment of the present invention, the current detection unit 460 may be connected between the rectifier 446 of the switching circuit 440 and the converter 452 of the control unit 450. The current detection unit 460 detects a current output from the rectifier 446 and transmits the detected current value to the converter 452. The converter 452 compares the detected current value with a predetermined value, and when the detected current value is greater than or equal to the predetermined value, the current output from the converter 452 may be cut off or reduced. When the current output from the converter 452 is cut off or reduced, the current output from the switching circuit 440 may also be cut off or reduced. Thereafter, the current detection unit 460 may continuously detect the current output from the rectifier 446 and may transmit the detected current value to the converter 452. When the detected current value is restored to a predetermined level, the converter 452 may restore the current output from the converter 452 to its original state. Accordingly, the current flowing from the switching circuit 440 may be maintained at a predetermined level, the battery unit 430 may be continuously charged, and malfunction of the doorbell 200 may be prevented.

Particularly, according to the embodiment of the present invention, when the current detection unit 460 is connected to the control unit 450, i.e., in front of the converter 452, and transmits the detected current value to the converter 452, current limitation by the converter 452 is possible even when a voltage supplied from the power input unit 410 is varied in the range of 8 to 24V. The current detection unit 460 may be a configuration included in the converter 452 and in this case, the current detection unit 460 may be a DC-DC converter which provides a current less than or equal to a predetermined current value.

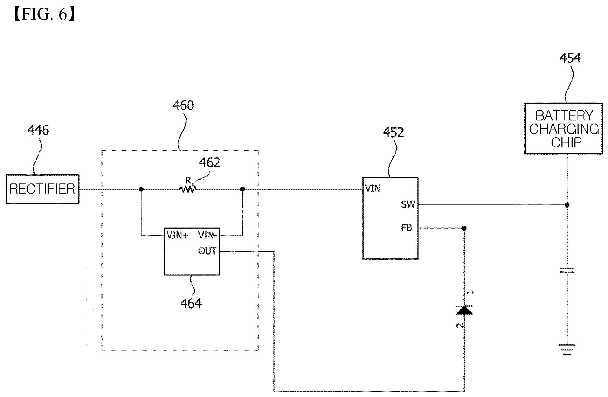

The operations of the current detection unit 460 and the converter 452 will be described in detail with reference to FIG. 6.

Referring to FIG. 6, the current detection unit 460 may include a resistor (R) 462 and a current detection chip 464. The current output from the rectifier 446 flows toward the current detection unit 460. At this point, a voltage difference across both ends of the resistor 462 included in the current detection unit 460 is input through a VIN+ terminal and a VIN- terminal of the current detection chip 464. In this case, the current detection chip 464 may detect a current value flowing from the rectifier 446 toward the converter 452 using the voltage difference across both the ends of the resistor 462.

Meanwhile, an OUT terminal of the current detection chip 464 may be connected to an FB terminal of the converter 452. Accordingly, the current value detected by the current detection chip 464 may be fed toward the FB terminal of the converter 452. The converter 452 may compare the current value fed forward from the current detection chip 464 with a predetermined value. When the detected current value is greater than or equal to a predetermined value, the converter 452 may cut off or reduce a current, which passes through the resistor 462, is input to the VIN terminal of the converter 452, and then is output from the converter 452, using a SW terminal. When the current output from the converter 452 toward the battery charging chip 454 is cut off or reduced, the current output from the rectifier 446 toward the converter 452 may be limited.

Meanwhile, the current detection unit 460 may continuously detect the current output from the rectifier 446 and may feed the detected current value toward the converter 452. When the detected current value is restored to a predetermined level, the converter 452 may restore the current output from the converter 452 to its original state

As described above, it has been described the example in which, when the doorbell switch 300 is pressed, a gate signal is applied to the gate electrode G of the triac element 442 connected to the doorbell switch 300, the closed path is formed as Path A, and thus the doorbell rings. The embodiment of the present invention is not limited thereto, and when the doorbell switch 300 is pressed, the SoC may control the doorbell.

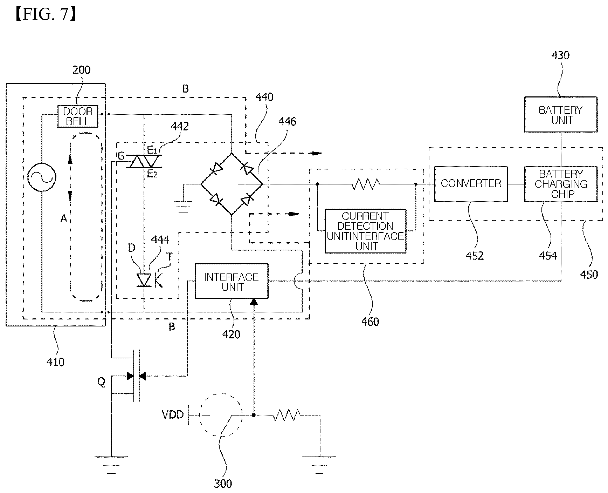

FIG. 7 is a circuit diagram included in a doorbell device according to another embodiment of the present invention. A description overlapping with those of FIGS. 5 to 6 will be omitted.

Referring to FIG. 7, when a doorbell switch 300 is pressed, i.e., when the doorbell switch 300 becomes an ON state, the doorbell switch 300 outputs a doorbell switch turn-on signal S1. The doorbell switch turn-on signal S1 is a signal indicating that the doorbell switch 300 is turned on. The doorbell switch turn-on signal S1 output from the doorbell switch 300 may be input to an SoC of the doorbell device 400. The SoC may be a main controller included in the interface unit 420 of FIG. 7, and the main controller may control at least one from among the interfaces of the doorbell device (FIG. 3), power, and the battery charging chip 454.

The SoC generates and outputs a doorbell control signal S2 using the doorbell switch turn-on signal S1. The doorbell control signal S2 is a signal that controls ringing of the doorbell. The ringing control of the doorbell may mean that a signal having a predetermined period and/or a predetermined magnitude is/are output to control at least one of a volume, a tone, and a pattern of a sound of the doorbell. The doorbell control signal S2 output from the SoC is input to a gate of a transistor Q to conduct the transistor Q. Here, the transistor Q is exemplified and described as being a field effect transistor (FET), but the present invention is not limited thereto, and the transistor Q may be a bipolar junction transistor (BJT).

Meanwhile, one terminal of the transistor Q is connected to the gate electrode G of the triac element 442. Therefore, when the transistor Q conducts, the gate signal is applied to the gate electrode G of the triac element 442, and the triac element 442 is turned on so that a path of a current is directed to the doorbell 200.

As described above, when the SoC generates and outputs the doorbell control signal S2, at least one of a cycle, the number of times, and a duration time of the ringing of the doorbell 200 may be adjusted.

Here, the SoC may be an internal configuration of the interface unit 420 shown in FIG. 3. At this point, in FIG. 3, it is exemplified that only the image module 422, the sensor module 423, the audio module 424, and the communication module 425 are connected to the SoC 421, but an input port for the doorbell switch turn-on signal S1 and an output port for the doorbell control signal S2 may be further connected to the SoC 421.

Alternatively, the SoC may be a separate configuration from the interface unit 420 shown in FIG. 3.

The gate element 444 of FIG. 7 may generate a signal that corresponds to an output of the doorbell 200. The gate element 444 may be omitted.

In the present disclosure, the doorbell and the doorbell switch which are installed within a house in advance are exemplified and described, but the present invention is not limited thereto. At least one of the doorbell and the doorbell switch may be included in the doorbell device according to one embodiment of the present invention.

As has been described above, while the description has been made with reference to the preferred embodiments of the present invention, it should be understood that various alternations and modifications of the present invention can be devised by those skilled in the art within a range not departing from the spirit and scope of the present invention, which are defined by the appended claims.

### [Description of Reference Numerals]

- 400:: doorbell device
- 410:: power input unit
- 420:: interface unit
- 430:: battery unit
- 440:: switching circuit
- 450:: control unit

## Claims

1. A doorbell device comprising:
a power input unit;
an interface unit;
a battery unit configured to supply power to the interface unit;
a switching circuit configured to change a path of a current supplied from the power input unit according to an ON or OFF state of the doorbell switch;
a control unit configured to charge the battery unit using a current output from the switching circuit; and
a current detection unit connected between the switching circuit and the control unit and configured to detect the current output from the switching circuit,
wherein, when a current value detected by the current detection unit is greater than or equal to a predetermined value, the control unit limits the current output from the switching circuit.

2. The doorbell device of claim 1, wherein, when the current output from the switching circuit toward the control unit is limited, the control unit controls the battery unit to supply power to the interface unit.

3. The doorbell device of claim 2, wherein a path of the current is a path directed to the control unit or a path directed to the doorbell switch.

4. The doorbell device of claim 3, wherein the switching circuit includes a triac element, and when the doorbell switch is turned on, the triac element cuts off a current output toward the control unit and allows the current to flow to the doorbell switch.

5. The doorbell device of claim 4, wherein the switching circuit further includes a gate element connected to the triac element, and the gate element is operated in response to the current flowing to the doorbell switch.

6. The doorbell device of claim 5, wherein the gate element transmits a driving signal to the interface unit.

7. The doorbell device of claim 6, wherein the interface unit is operated in a sleep mode or an operation mode, and when the interface unit is operated in the operation mode, power consumption is greater than power consumption when the interface unit is operated in the sleep mode.

8. The doorbell device of claim 7, wherein the interface unit is switched from the sleep mode to the operation mode in response to the driving signal.

9. The doorbell device of claim 8, wherein the gate element includes an optocoupler.

10. The doorbell device of claim 1, wherein the interface unit includes at least one of an audio module, an image module, a communication module, and a sensor module.

11. The doorbell device of claim 1, wherein:
the switching circuit includes a rectifier, and
the rectifier rectifies an alternating current (AC), which is a current received from the power input unit, into a direct current (DC) current and supplies the DC current to the control unit.

12. The doorbell device of claim 1, wherein the control unit includes a converter and a battery charging chip.

13. The doorbell device of claim 12, wherein a current value detected by the current detection unit is input to the converter, and when the current value is greater than or equal to a predetermined value, the converter cuts off or reduces the current output from the switching circuit.

14. The doorbell device of claim 1, wherein:
the interface unit includes a System on Chip (SoC) for controlling the interface unit, and
when the SoC receives a doorbell switch turn-on signal from the doorbell switch, the SoC generates and outputs a doorbell control signal.

15. The doorbell device of claim 14, wherein the switching circuit includes a triac element connected to the doorbell, and the doorbell control signal is applied to a gate electrode of the triac element.

16. The doorbell device of claim 15, wherein:
a transistor is further disposed between the SoC and the gate electrode of the triac element, and
when the doorbell control signal output from the SoC conducts the transistor, a gate signal is applied to the gate electrode of the triac element.

17. The doorbell device of claim 16, wherein at least one of a cycle, the number of times, and a duration time of ringing of the doorbell is adjusted according to the doorbell control signal.

18. A method for supplying power to a doorbell device, comprising:
receiving, by a switching circuit, power from a power input unit;
changing, by the switching circuit, a path of a current supplied from the power input unit according to an ON or OFF state of a doorbell switch;
detecting, by a current detection unit, a current output from the switching circuit;
when a current value detected by the current detection unit is greater than or equal to a predetermined value, limiting, by a control unit, the current output from the switching circuit;
charging, by the control unit, the battery unit using the current output from the switching circuit; and
supplying, by the battery unit, charged power to the interface unit.

19. The method of claim 18, wherein the limiting of the current includes:
receiving, by the control unit, the detected current value from the current detection unit;
comparing the detected current value with the predetermined value; and
when the detected current value is greater than or equal to the predetermined value, cutting off or reducing the current output from the switching circuit.
